# FASCICULE DE BREVET EUROPEEN

(11) **EP 0 991 090 B1**
(45) Date de publication et mention de la délivrance du brevet: **14.04.2004**
(21) Numéro de dépôt: 99410117.8
(22) Date de dépôt: 22.09.1999
(51) Int. Cl.: H01F 27/04, H02B 1/18

(54) **Liaison électrique haute tension multifonctionnelle monobloc, comportant une traversée et une interface de raccordement à un fusible et dispositif de protection comportant une telle liaison électrique**
Multifunktionelle einstückige elektrische Verbindung, mit einer Durchführung und einer Anschlusseinrichtung an eine Sicherung und Schutzvorrichtung mit einer solchen elektrischen Verbindung
Multifunctional monobloc high-voltage electrical connection, with a bushing and an interface for connecting to a fuse and protection device including such an electrical connection

(30) Priorité: 01.10.1998 FR 9812517
(43) Date de publication de la demande: 05.04.2000
(73) Titulaire: Schneider Electric Industries SAS, 92500 Rueil-Malmaison (FR)
(72) Inventeur: Kersusan, Jean-Pierre, 38050 Grenoble Cedex 09 (FR); Perrin, Maurice, 38050 Grenoble Cedex 09 (FR); Pennucci, Victor, 38050 Grenoble Cedex 09 (FR)
(74) Mandataire: Ritzenthaler, Jacques

(56) Documents cités:
- EP-A- 0 110 008
- EP-A- 0 981 140
- US-A- 4 721 474
- US-A- 5 625 168

## Description

L'invention concerne une liaison électrique destinée à l'alimentation électrique d'un appareillage haute tension, protégé par un fusible disposé en série entre la source d'alimentation électrique et l'appareillage, le fusible étant au moins partiellement immergé dans une cuve de protection contenant un diélectrique liquide ou gazeux.

Le document EP-A-0 224 072 décrit un transformateur triphasé plongé dans une cuve contenant un diélectrique liquide, en l'espèce de l'huile, et dont l'alimentation est assurée au travers d'une liaison électrique comportant une traversée haute tension entre l'extérieur et l'intérieur de la cuve. Le circuit primaire du transformateur est protégé par des fusibles disposés à l'intérieur de la cuve et dont les caractéristiques sont telles qu'ils ne répondent qu'à des défauts électriques correspondant à des défauts internes du transformateur. Dans ce type d'installation, il est nécessaire de se prémunir contre les risques d'établissement d'un arc électrique entre un enroulement primaire du transformateur et la traversée. D'un tel arc résulterait en effet un court-circuit ne traversant pas le fusible, si bien que celui-ci ne serait pas en mesure de le couper. Pour limiter ce risque, le document enseigne d'une part de disposer le fusible de telle manière que la distance entre l'extrémité inférieure de la traversée pour la haute tension et l'extrémité supérieure du fusible soit inférieure à la moitié de la longueur du fusible, et d'autre part de réaliser la section de conducteur entre l'extrémité inférieure de la traversée pour la haute tension et le fusible de manière à ne pas former un point de départ pour un arc électrique, en enveloppant la section de conducteur située entre l'extrémité inférieure de la traversée pour la haute tension et le fusible dans des morceaux de tubes isolants emmanchés par frettage, et/ou en munissant le fusible d'un écran tronconique de protection en matériau isolant, qui s'ouvre en direction de la traversée pour la haute tension.

Une telle disposition complique le montage et le démontage de la traversée et du fusible. De plus, la forme de l'écran tronconique, si elle est susceptible de prémunir des risques de naissance d'un arc entre enroulement et traversée, répond mal au risque de claquage d'un arc entre les extrémités inférieures de deux traversées adjacentes, en particulier au niveau des têtes de fusibles, a fortiori entre un fusible et les parois de la cuve, notamment en cas de baisse du niveau ou de la qualité du diélectrique dans la cuve.

Le document EP-0 110 008 décrit un dispositif de liaison électrique destiné au transport de l'énergie entre le réseau électrique haute tension et un fusible de protection d'un appareillage électrique disposé à l'intérieur d'une cuve contenant un diélectrique liquide ou gazeux, le fusible étant placé à l'extérieur de la cuve.

Le document EP-0 981 140, faisant partie de l'état de la technique en vertu des dispositions de l'article 54-3 CBE, décrit un transformateur électrique immergé auto-protégé par un dispositif incluant un disjoncteur et des fusibles, un dispositif de liaison électrique reliant un fusible placé dans une cuve au réseau électrique. La présente invention vise à simplifier le montage et le démontage d'une liaison électrique du type précédent. Elle vise également à proposer une liaison électrique simple et peu coûteuse utilisable pour l'alimentation d'un appareillage électrique moyenne tension protégé par un fusible, diminuant les risques de court-circuit au niveau de la borne du fusible côté alimentation, notamment en cas de baisse du niveau ou de la qualité du diélectrique.

Ces objectifs sont atteint grâce à un dispositif de liaison électrique destiné au transport de l'énergie entre le réseau électrique haute tension et un fusible de protection d'un appareillage électrique constituant une charge et disposé à l'intérieur d'une cuve contenant un diélectrique liquide ou gazeux et comportant un orifice, le fusible comportant deux bornes, l'une côté alimentation et l'autre côté charge, la borne côté charge étant disposée à l'intérieur de la cuve les deux bornes du fusible étant reliées par un élément fusible contenu dans un corps diélectrique le dispositif comportant :
- une âme conductrice de l'électricité ;
- une interface de raccordement côté alimentation destinée au raccordement électrique de l'âme avec l'alimentation électrique ;
- une traversée apte à être insérée dans l'orifice et comportant des moyens d'obturation de l'orifice et de fixation à la paroi de la cuve aptes à établir l'étanchéité entre l'intérieur et l'extérieur de la cuve au niveau de l'orifice et à isoler électriquement l'âme de la paroi de la cuve ;
- une interface de raccordement côté charge destinée au raccordement électrique de l'âme avec la borne du fusible côté alimentation ;
dispositif dans lequel l'interface de raccordement côté charge comporte un fourreau en matériau élastomère apte à se déformer élastiquement de façon à envelopper la borne du fusible côté alimentation et à assurer l'étanchéité et l'isolation électrique entre la borne du fusible côté alimentation et le milieu intérieur de la cuve.

La borne du fusible côté alimentation se situe préférentiellement, mais non nécessairement à l'intérieur de la cuve, notamment pour des raisons de résistance au chocs et de rigidité.

Le fourreau comporte au moins une paroi incluant un revêtement électriquement conducteur. Le revêtement est alors au potentiel de la borne du fusible. Ceci permet de limiter les risques d'ionisation de l'air par effet couronne entre la borne de fusible et le fourreau. Le revêtement peut prendre la forme d'une couche d'élastomère chargée en particules de carbone conductrices, ou d'un film de matériau conducteur. Alternativement, l'intérieur du fourreau peut être couvert par une jupe métallique en forme de coupelle, rendue flexible par la présence de fentes périphériques axiales. Cette jupe peut être par exemple sertie sur l'extrémité de l'âme, le fourreau élastomère étant alors surmoulé sur cette jupe. Il est également possible de combiner une jupe métallique et un film conducteur.

De manière préférentielle, le fourreau comporte une lèvre apte à coopérer avec le corps du fusible de façon à assurer l'étanchéité entre le diélectrique de la cuve et l'intérieur du fourreau. Cette disposition permet de parfaitement maîtriser l'isolation de la borne du fusible.

Avantageusement, la traversée comporte un revêtement en matériau élastomère moulé avec le fourreau. Cette disposition confère à la traversée des propriétés mécanique intéressantes, et notamment une certaine élasticité à la flexion et à la torsion, qui permettent un découplage mécanique entre le réseau et la charge. Un tel découplage est utile notamment lorsque la charge est soumise à des vibrations mécaniques. De plus, la fabrication de la liaison électrique est particulièrement simple dans ce cas.

Préférentiellement, le dispositif comporte un fil électrique déformable avec une gaine isolante en matériau élastomère enveloppant un ou plusieurs conducteurs électriques constituant une partie de l'âme du dispositif. Dans le cas où le fil électrique déformable est disposé à l'extérieur de la cuve la liaison permet d'éliminer un jeu de prises par rapport au dispositifs conventionnels. Elle permet également une grande liberté de positionnement de l'appareillage électrique. Alternativement, le fil peut être disposé à l'intérieur de la cuve, entre la traversée et la prise côté charge. On peut également combiner un fil électrique à l'extérieur de la cuve et un fil électrique à l'intérieur de la cuve.

Avantageusement, la gaine isolante du fil électrique est dans le même matériau élastomère que celui du fourreau ce qui permet de mouler dans une même étape de fabrication les différentes parties du dispositif.

L'expression fil électrique désigne dans la présente demande de manière générique les conducteurs électriques longilignes déformables, constitués par exemple de brins métalliques entrelacés. Préférentiellement, le fil électrique comporte une tresse de brins conducteurs. Le câble tressé, c'est à dire croisé relativement à plat à la manière d'une natte, confère une flexibilité beaucoup plus importante que les câbles toronnés classiques. Pour des courants moins intenses, des câbles en toron ou à un fil sont susceptibles d'offrir une alternative.

Un autre aspect de l'invention concerne dispositif de protection d'un appareillage électrique moyenne tension notamment d'un transformateur confiné dans une cuve contenant un diélectrique liquide ou gazeux et comportant un orifice, ce dispositif comportant :
- un fusible de protection au moins partiellement disposé à l'intérieur de la cuve et branché entre l'alimentation et l'appareillage le fusible comportant deux bornes, l'une côté alimentation et l'autre côté charge, reliées par un élément fusible contenu dans un corps diélectrique la borne côté charge étant disposée à l'intérieur de la cuve et
- un dispositif de liaison électrique tel que décrit ci-dessus, dont l'interface de raccordement côté charge est branchée sur la borne du fusible côté alimentation.

Un tel dispositif garantit une isolation de grande qualité entre le fusible et l'intérieur de la cuve.

Un autre aspect de l'invention concerne un appareillage électrique constituant une charge alimentée par un réseau électrique haute tension, disposé à l'intérieur d'une cuve contenant un diélectrique liquide ou gazeux et comportant un orifice, et muni d'un dispositif de protection comme décrit précédemment, disposé entre le réseau électrique et l'appareillage électrique.

D'autres avantages et caractéristiques de l'invention ressortiront de la description qui va suivre de différents modes de réalisation de l'invention, donné à titre d'exemples non limitatifs et représentés aux dessins annexés dans lesquels:
- la figure 1 représente une vue en coupe d'un appareillage électrique moyenne tension alimenté par l'intermédiaire d'une liaison électrique selon un premier mode de réalisation de l'invention ;
- la figure 2 représente une vue en coupe longitudinale de la liaison électrique de la figure 1, dans une position de référence ;
- la figure 3 représente une vue en coupe longitudinale d'une liaison électrique selon un deuxième mode de réalisation de l' invention ;
- la figure 4 représente une vue en coupe longitudinale d'une liaison électrique selon un troisième mode de réalisation de l'invention.

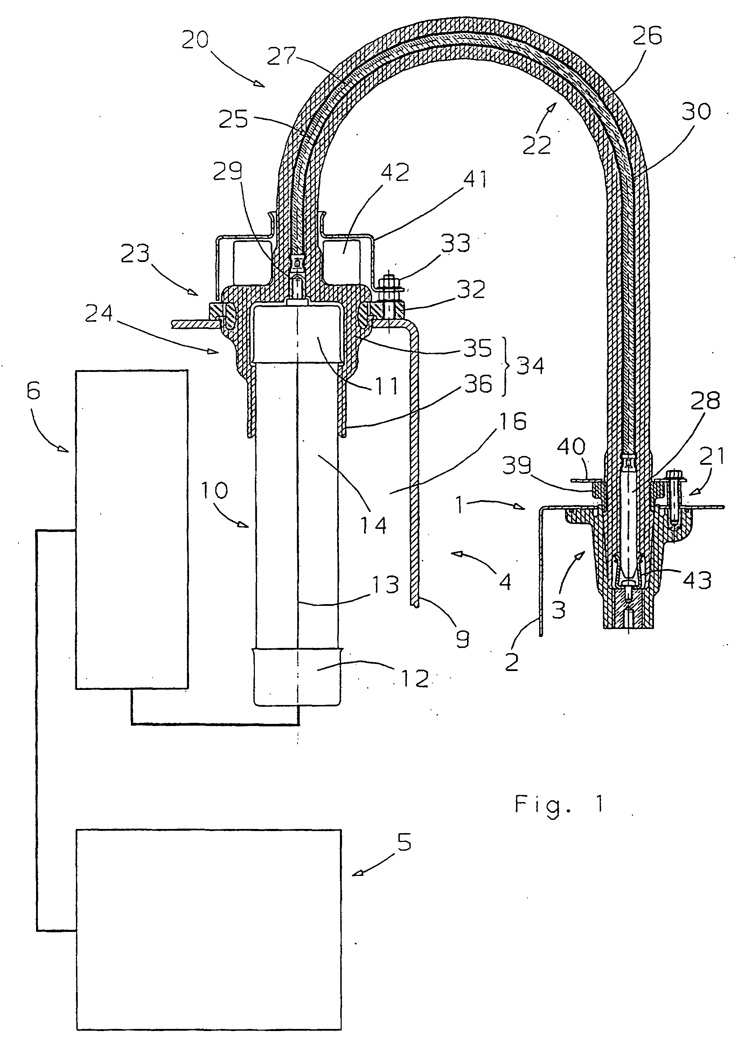

En référence à la figure 1, un tableau électrique moyenne tension 1, confiné dans une enceinte 2 remplie par un diélectrique gazeux, en l'espèce de l'hexafluorure de soufre, comporte des départs 3 délivrant le courant du réseau à un appareillage électrique 4 constituant une charge. Cet appareillage 4 comporte un transformateur 5 moyenne tension / basse tension triphasé, et un dispositif de protection comprenant un disjoncteur triphasé 6 et des fusibles 10, branché en amont des enroulements primaires du transformateur 5. Le disjoncteur 6 est destiné à la protection contre les défauts électriques n'induisant que de faibles surintensités au niveau du primaire, notamment des défauts apparaissant sur les enroulements secondaires. Chaque fusible 10 est branché en série entre le réseau et le disjoncteur, et sensible de manière sélective aux courts-circuits affectant les enroulements primaires du transformateur 5. Une description détaillée de ce dispositif peut être trouvée dans la demande de brevet français portant le numéro d'enregistrement national 98/10519. Chaque fusible 10 comporte, de manière classique, deux bornes d'extrémité 11, 12 métalliques reliées par un élément fusible 13 contenu dans un corps cylindrique 14 comprenant un matériau diélectrique solide. L'appareillage électrique 4 est confiné dans une cuve 9 composant une enceinte étanche remplie d'un fluide diélectrique 16, en l'occurrence de l'huile.

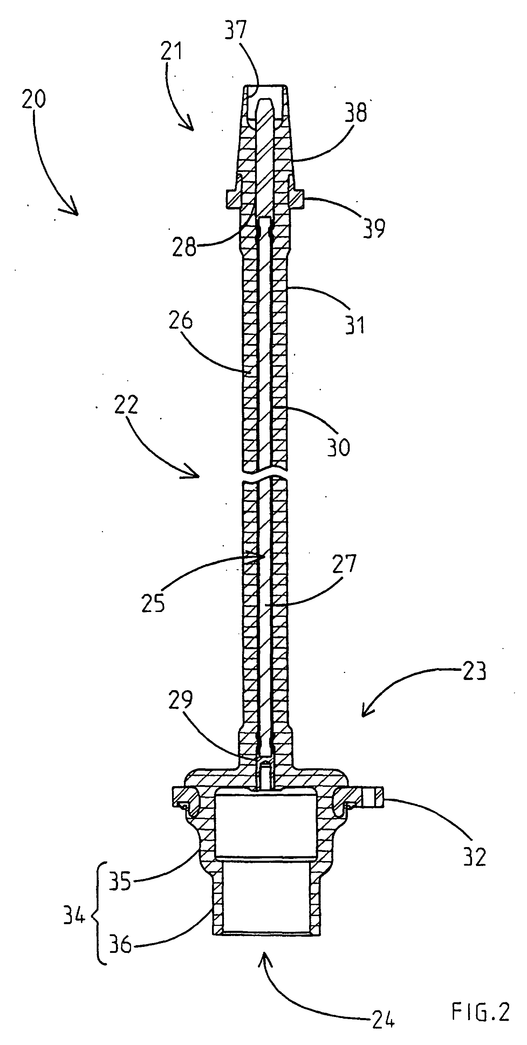

Une liaison électrique 20 selon le premier mode de réalisation de l'invention, représentée sur les figures 1 et 2, est destinée à l'alimentation électrique des enroulement primaires du transformateur et connectée d'une part au réseau au niveau des départs 3, et d'autre part à l'appareillage 4. Cette liaison électrique comporte un raccordement extérieur 21 destiné à la connexion avec le réseau, une partie médiane constituant un fil électrique flexible 22, une traversée 23 assurant l'étanchéité au niveau d'un orifice pratiqué dans une paroi de la cuve 9, et un raccordement intérieur 24, dans lequel vient s'embrocher la borne 11 du fusible 10.

La liaison électrique 20 comporte une âme 25 conductrice de l'électricité, recouverte par une enveloppe 26 en matériau élastomère bon isolant. L'âme 25 comporte dans sa partie médiane une tresse 27 composée de brins métalliques et, à chaque extrémité, une broche 28, 29 sertie sur la tresse 27. l'âme 25 comporte en outre un revêtement conducteur 30 enrobant la tresse métallique 27. La couche d'enrobage 30 permet d'éliminer les effets de pointes des brins faisant saillie radialement hors de la tresse 27 et de lisser les surfaces équipotentielles au voisinage des irrégularités de la surface de la tresse. En pratique, le revêtement conducteur 30 est constitué d'un substrat en silicone chargé en particules de carbone conductrices.

L'enveloppe 26 est, dans cet exemple de réalisation, constituée par un silicone vulcanisable à froid de forme générale cylindrique, qui constitue également le corps de la traversée et des raccordements côté alimentation et côté charge. L'enveloppe 26 est recouverte d'un blindage constitué d'un film conducteur 31 qui est porté au potentiel de la masse. A titre indicatif, pour une tension nominale de 24 kV et un courant nominal de 100 A, le diamètre de la tresse est de l'ordre de 8 mm, pour un diamètre extérieur du câble de l'ordre de 30 mm. Comme on le voit sur les positions au repos de la figure 2 et en service de la figure 1, le câble de la liaison 20 est apte à fléchir d'un angle important, en l'occurrence de 180°au moins. En d'autres termes, lorsque l'on fixe l'une des extrémités de la liaison, par exemple l'extrémité intérieure, l'autre est capable de passer de manière réversible d'une première position de référence - par exemple la position de repos de la figure 2 - à une deuxième position dans laquelle elle a subit une rotation de 180° - dans l'exemple , la position de la figure 1. En l'espèce cette flexion est possible dans tous les plans de l'espace, de part et d'autre de la position de repos. Ces degrés de liberté permettent de positionner sans contraintes excessives l'extrémité libre de la liaison.

La traversée 23 et le raccordement intérieur 24 sont, dans ce mode de réalisation, imbriqués l'un dans l'autre. La traversée 23 comporte une bride de fixation 32 venant se fixer sur la paroi de la cuve 9 par l'intermédiaire de vis de fixation 33. Un capot de protection 41 protège un transformateur de courant 42 délivrant un signal représentatif de l'intensité du courant traversant la liaison 20. Le raccordement intérieur 24 comporte un fourreau 34 dont une partie 35 est conformée en coupelle reprenant approximativement les formes de la borne du fusible côté alimentation, avec une paroi cylindrique et un fond plan sur lequel affleure l'extrémité de la broche côté charge 29 de l'âme conductrice de la liaison 20. Cette coupelle 35 se prolonge en une lèvre 36 cylindrique de diamètre légèrement plus faible de manière à ce conformer au corps 14 du fusible. Les parois internes de la coupelle 35 sont recouvertes d'un film conducteur, de telle sorte qu'elle sont au potentiel de la broche côté charge 29 de l'âme. Lorsque le fusible 10 est inséré dans le raccordement 24, la lèvre périphérique 36 du raccordement coopère avec le corps cylindrique 14 du fusible et subit une déformation élastique qui permet d'assurer une pression de contact suffisante avec le corps du fusible, de sorte qu'est constitué un joint étanche entre l'intérieur de la coupelle 35 et le milieu extérieur baignant dans le diélectrique fluide de la cuve 9.

Le raccordement extérieur 21 comporte une cavité 37 en coupelle, du fond de laquelle saillit l'extrémité de la broche côté alimentation 28. Le pourtour extérieur du raccordement 21 comporte une paroi tronconique 38 formant une surface de guidage et réalisant l'étanchéité diélectrique, ainsi qu'un collier 39 d'appui pour une bride de fixation 40. Ce raccordement 21 est destiné à s'embrocher sur une pince 43 du départ 3 du tableau moyenne tension 1.

La liaison électrique multifonctionnelle est fabriquée en plaçant dans un moule l'âme de la liaison, légèrement sollicitée en traction par ses extrémités, puis en injectant le silicone à froid avec une légère surpression, par des têtes réparties en anneau autour de l'âme. Dans une deuxième étape, la paroi cylindrique externe de la gaine est recouverte d'un film conducteur en silicone chargé de particules de carbone, par projection de peinture. De même, un film de peinture est déposé sur la surface intérieure de la coupelle de la prise côté charge.

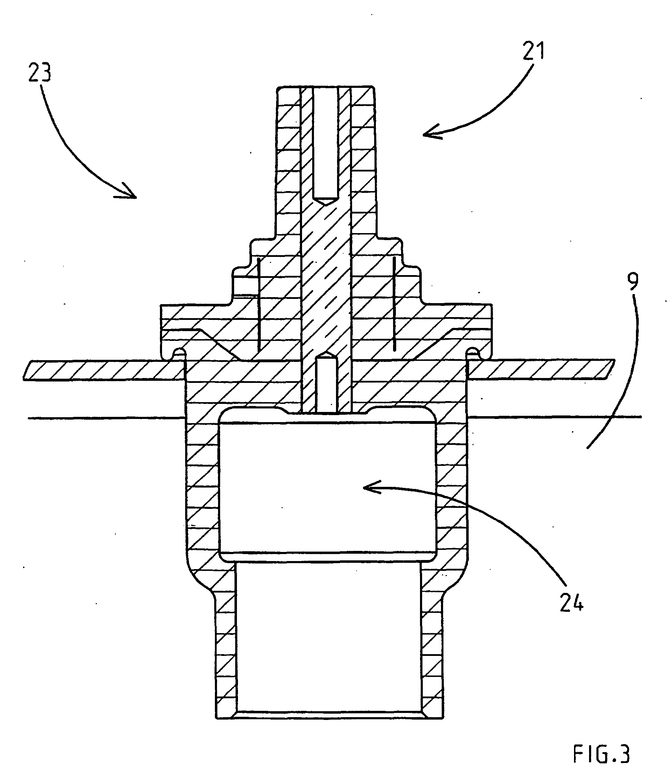

En référence à la figure 3, un deuxième mode de réalisation de l'invention se distingue du premier par l'absence de section de fil électrique flexible. La connexion au réseau se fait alors par l'intermédiaire d'un câble séparé, venant s'enficher dans le raccordement côté alimentation 21.

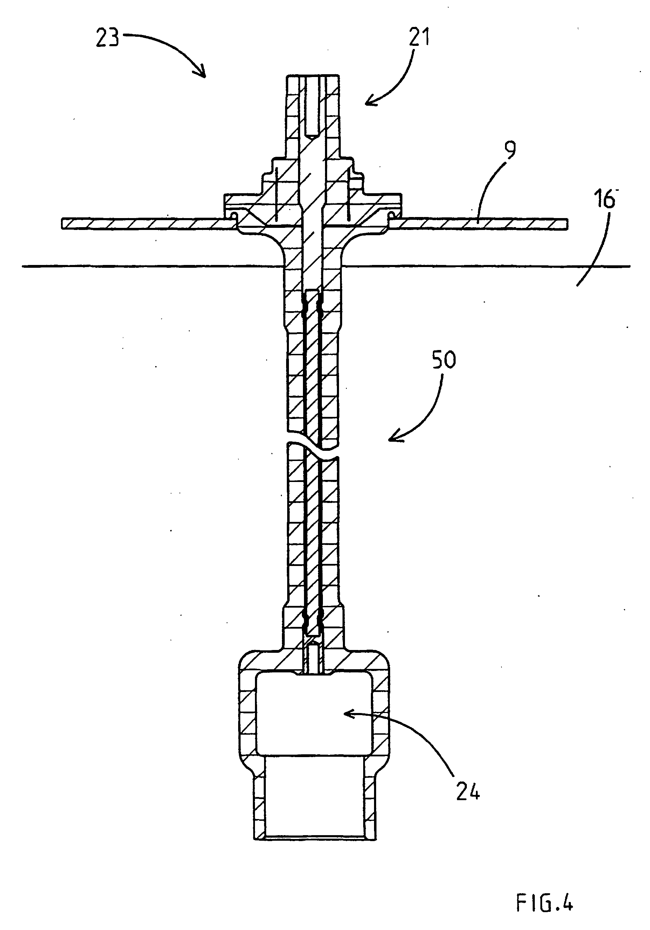

La figure 4 représente un troisième mode de réalisation de l'invention. Ici, le raccordement côté alimentation 21 se situe dans la traversée, qui est reliée au raccordement côté charge 24 par l'intermédiaire d'un fil électrique 50 de structure identique à celui du premier mode de réalisation. On obtient ainsi une liberté de positionnement du fusible par rapport à la traversée.

Naturellement, l'invention est sujette à diverses variations. En particulier, il peut être avantageux d'utiliser des matériaux différents pour les différentes parties de la liaison, en fonction des caractéristiques mécaniques recherchées. Plus précisément, il est possible de former le corps de la traversée en un matériau très rigide et d'y faire adhérer le matériau élastomère de la prise côté charge et celui du fil électrique flexible. Il est également possible d'utiliser des élastomères différents pour la prise côté charge et le fil. Les élastomères entrant en ligne de compte ne sont pas uniquement les silicones vulcanisables à froid : d'autres classes de silicone, notamment des silicones vulcanisables à chaud, peuvent être utilisées. Enfin d'autres matériaux élastomères sont également envisageables.

Dans les exemples de réalisation ci-dessus, le fusible est disposé intégralement à l'intérieur de la cuve, d'un même côté du plan moyen du couvercle de la cuve, ce qui constitue une protection contre les chocs. Toutefois, l'invention garde son intérêt lorsque le raccordement du fusible côté alimentation est situé au dessus de ce plan moyen, tant que la borne du fusible côté charge baigne dans le fluide diélectrique et rend nécessaire une maîtrise de l'isolation en amont du corps du fusible.

Les formes spécifiques de la coupelle de la prise côté charge de la liaison sont dictées par les formes correspondantes du fusible et varient d'un fusible à l'autre. L'important est de conformer la lèvre de fourreau de manière à assurer une déformation élastique engendrant une pression de contact suffisante du matériau élastomère de la prise sur le corps du fusible. La coupelle est elle aussi conformée en fonction de la forme de la borne du fusible. On peut également prévoir un vissage de la tête de fusible dans la coupelle.

Dans les exemples de réalisation précédents, la cuve contient de l'huile. Toutefois, l'invention est également applicable à des appareillage baignant dans d'autres diélectriques liquide ou gazeux, notamment dans de l'hexafluorure de soufre.

Par ailleurs, le dispositif de protection comportant la liaison électrique et le fusible peut être utilisée pour tout type d'appareillages immergés dans l'huile ou dans un gaz diélectrique. En particulier, il est applicable à un transformateur disjoncteur intermédiaire.

Les exemples de réalisation concernent la moyenne tension qui, au sens de la présente demande, fait partie de la haute tension. Toutefois, l'invention peut également être appliquée au delà de 56kV.

## Revendications

1. Dispositif de liaison électrique (20) destiné au transport de l'énergie entre le réseau électrique haute tension et un fusible (10) de protection d'un appareillage électrique (4) constituant une charge et disposé à l'intérieur d'une cuve (9) contenant un diélectrique (16) liquide ou gazeux et comportant un orifice, le fusible (10) comportant deux bornes, l'une (11) côté alimentation et l'autre (12) côté charge, la borne côté charge (12) étant disposée à l'intérieur de la cuve (9), les deux bornes (11, 12) du fusible (10) étant reliées par un élément fusible (13) contenu dans un corps diélectrique (14), le dispositif (20) comportant :
• une âme (25) conductrice de l'électricité ;
• une interface de raccordement côté alimentation (21) destinée au raccordement électrique de l'âme (25) avec l'alimentation électrique ;
• une traversée (23) apte à être insérée dans l'orifice et comportant des moyens d'obturation de l'orifice et de fixation à la paroi de la cuve (9), aptes à établir l'étanchéité entre l'intérieur et l'extérieur de la cuve (9) au niveau de l'orifice et à isoler électriquement l'âme de la paroi de la cuve (9) ;
• une interface de raccordement côté charge (24) destinée au raccordement électrique de l'âme (25) avec la borne du fusible côté alimentation (11) ;
**caractérisé en ce que** l'interface de raccordement côté charge (24) comporte un fourreau (34) en matériau élastomère apte à se déformer élastiquement de façon à envelopper la borne du fusible côté alimentation (11) et à assurer l'étanchéité et l'isolation électrique entre la borne du fusible côté alimentation (11) et le milieu intérieur de la cuve (9), le fourreau (34) comportant au moins une paroi incluant un revêtement électriquement conducteur.

2. Dispositif selon la revendication 1, **caractérisé en ce que** le fourreau (34) comporte une lèvre (36) apte à coopérer avec le corps (14) du fusible (10) de façon à assurer l'étanchéité entre le diélectrique (16) de la cuve (9) et l'intérieur du fourreau (34).

3. Dispositif selon l'une quelconque des revendications précédentes, **caractérisé en ce que** la traversée (23) comporte un revêtement en matériau élastomère moulé avec le fourreau (34).

4. Dispositif selon l'une quelconque des revendications précédentes, **caractérisé en ce qu'**il comporte un fil électrique déformable (22) avec une gaine isolante (26) en matériau élastomère enveloppant un ou plusieurs conducteurs électriques constituant une partie de l'âme (25) du dispositif.

5. Dispositif selon la revendication 4, **caractérisé en ce que** le fil électrique déformable (22) est disposé à l'extérieur de la cuve (9).

6. Dispositif selon l'une quelconque des revendications 4 ou 5, **caractérisé en ce que** la gaine isolante (26) du fil électrique (22) est dans le même matériau élastomère que celui du fourreau (34).

7. Dispositif selon l'une quelconque des revendications 4 à 6, **caractérisé en ce que** le fil électrique (22) comporte une tresse (27) de brins conducteurs.

8. Dispositif de protection d'un appareillage électrique moyenne tension (4), notamment d'un transformateur (5), confiné dans une cuve (9) contenant un diélectrique liquide ou gazeux et comportant un orifice, ce dispositif comportant :
• un fusible (10) de protection au moins partiellement disposé à l'intérieur de la cuve (9) et branché entre l'alimentation et l'appareillage (4), le fusible (10) comportant deux bornes, l'une (11) côté alimentation et l'autre (12) côté charge, reliées par un élément fusible (13) contenu dans un corps diélectrique (14), la borne côté charge (12) étant disposée à l'intérieur de la cuve (9) ; et
• un dispositif de liaison électrique (20) selon l'une quelconques des revendications 1 à 7, dont l'interface de raccordement côté charge (24) est branchée sur la borne du fusible côté alimentation (11).

9. Appareillage électrique (4) constituant une charge alimentée par un réseau électrique haute tension, disposé à l'intérieur d'une cuve (9) contenant un diélectrique (16) liquide ou gazeux et comportant un orifice, et muni d'un dispositif de protection selon la revendication 8 disposé entre le réseau électrique et l'appareillage électrique.

## Claims

1. Electrical connecting device (20) designed for transporting energy between the high voltage electrical power system and a protective fuse (10) protecting an electrical switchgear apparatus (4) constituting a load and located inside a tank (9) containing a liquid or gas dielectric (16) and comprising an orifice, the fuse (10) comprising two terminals, one (11) on the power supply side and the other (12) on the load side, the load-side terminal (12) being located inside the tank (9), the two terminals (11, 12) of the fuse (10) being connected by a fuse element (13) contained in a dielectric body (14), the device (20) comprising:
• an electricity conducting core (25) ;
• a power supply side connecting interface (21) designed for electrical connection of the core (25) with the electrical power supply ;
• a bushing (23) designed to be inserted in the orifice and comprising means for sealing the orifice and for fixing to the wall of the tank (9), designed to achieve the tightness between the inside and outside of the tank (9) at the level of the orifice and to electrically insulate the core from the wall of the tank (9) ;
• a load-side connecting interface (24) designed for electrical connection of the core (25) with the power supply side terminal (11) of the fuse ;
**characterized in that** the load-side connecting interface (24) comprises a sheath (34) made of elastomer material able to be deformed elastically so as to envelop the power supply side terminal (11) of the fuse and to achieve the tightness and electrical insulation between the power supply side terminal (11) of the fuse and the internal medium of the tank (9), the sheath (34) comprising at least one wall including an electrically conducting coating.

2. The device according to claim 1, **characterized in that** the sheath (34) comprises a lip (36) designed to operate in conjunction with the body (14) of the fuse (10) so as to achieve the tightness between the dielectric (16) of the tank (9) and the inside of the sheath (34).

3. The device according to any one of the foregoing claims, **characterized in that** the bushing (23) comprises a coating made of elastomer material moulded with the sheath (34).

4. The device according to any one of the foregoing claims, **characterized in that** it comprises a deformable electrical wire (22) with an insulating cladding (26) made of elastomer material enveloping one or more electrical conductors forming a part of the core (25) of the device.

5. The device according to claim 4, **characterized in that** the deformable electrical wire (22) is located outside the tank (9).

6. The device according to either one of the claims 4 or 5, **characterized in that** the insulating cladding (26) of the electrical wire (22) is made of the same elastomer material as that of the sheath (34).

7. The device according to any one of the claims 4 to 6, **characterized in that** the electrical wire (22) comprises a braid (27) of conducting strands.

8. A protective device of a medium voltage electrical switchgear apparatus (4), in particular a transformer (5), housed in a tank (9) containing a liquid or gas dielectric and comprising an orifice, this device comprising:
• a protective fuse (10) at least partially located inside the tank (9) and connected between the power supply and the switchgear apparatus (4), the fuse (10) comprising two terminals, one (11) on the power supply side and the other (12) on the load side, connected by a fuse element (13) contained in a dielectric body (14), the load-side terminal (12) being located inside the tank (9) ; and
• an electrical connection device (20) according to any one of the claims 1 to 7, whose load-side connecting interface (24) is connected to the power supply side terminal (11) of the fuse.

9. An electrical switchgear apparatus (4) constituting a load supplied by a high voltage electrical power system, located inside a tank (9) containing a liquid or gas dielectric (16) and comprising an orifice, and provided with a protective device according to claim 8 arranged between the electrical power system and the electrical switchgear apparatus.

## Patentansprüche

1. Elektrische Verbindungsanordnung (20) zur Energieübertragung zwischen einem elektrischen Hochspannungsnetz und einer Schutzsicherung (10) eines elektrischen Gerätes (4), das eine Last darstellt und im Inneren eines mit einem flüssigen oder gasförmigen Dielektrikum (16) gefüllten sowie eine Öffnung aufweisenden Gefäßes (9) installiert ist, wobei die Sicherung (10) zwei Anschlußkontakte umfaßt, von denen einer (11) einspeiseseitig und der andere (12) lastseitig angeordnet ist, der lastseitige Anschlußkontakt (12) im Innern des Gefäßes (9) angeordnet ist und die beiden Anschlußkontakte (11, 12) der Sicherung (10) über einen, in einem Isolierstoffkörper (14) angeordneten Schmelzleiter (13) miteinander verbunden sind, welche Anordnung (20)
• einen elektrisch leitenden Kern (25),
• eine einspeiseseitige Anschlußvorrichtung (21) zur elektrischen Verbindung des Kerns (25) mit der Stromversorgung,
• eine Durchführung (23), die in die Öffnung eingesetzt werden kann und Mittel zur Abdeckung der Öffnung sowie zur Befestigung an der Wand des Gefäßes (9) umfaßt, welche geeignet sind, die Dichtigkeit zwischen dem Innenraum und der äußeren Umgebung des Gefäßes (9) im Bereich der Öffnung zu gewährleisten sowie den Kern gegenüber der Wand des Gefäßes (9) elektrisch zu isolieren, sowie
• eine lastseitige Anschlußvorrichtung (24) zur elektrischen Verbindung des Kerns (25) mit dem einspeiseseitigen Anschlußkontakt (11) der Sicherung umfaßt,
**dadurch gekennzeichnet, daß** die lastseitige Anschlußvorrichtung (24) eine Hülse (34) aus einen Elastomer umfaßt, welche elastisch verformbar ist, so daß sie den einspeiseseitigen Anschlußkontakt (11) der Sicherung umschließt und die Dichtigkeit sowie die elektrische Isolation zwischen dem einspeiseseitigen Anschlußkontakt (11) der Sicherung und dem Innenraum des Gefäßes (9) gewährleistet, wobei die Hülse (34) mindestens eine Wand mit einer elektrisch leitenden Beschichtung umfaßt.

2. Anordnung nach Anspruch 1, **dadurch gekennzeichnet, daß** an der Hülse (34) eine Lippe (36) ausgebildet ist, die dazu dient, mit dem Rohrkörper (14) der Sicherung (10) zusammenzuwirken, um die Dichtigkeit zwischen dem im Gefäß (9) enthaltenen Dielektrikum (16) und dem Inneren der Hülse (34) zu gewährleisten.

3. Anordnung nach irgendeinem der vorhergehenden Ansprüche, **dadurch gekennzeichnet, daß** die Durchführung (23) eine Beschichtung aus einem mit der Hülse (34) vergossenen Elastomer umfaßt.

4. Anordnung nach irgendeinem der vorhergehenden Ansprüche, **dadurch gekennzeichnet, daß** sie einen biegsamen elektrischen Leiterdraht (22) mit einer Isolierstoffhülle (26) aus einem Elastomer umfaßt, die einen oder mehrere, einen Teil des Kerns (25) der Anordnung bildende elektrische Leiter umgibt.

5. Anordnung nach Anspruch 4, **dadurch gekennzeichnet, daß** der biegsame Leiterdraht (22) außerhalb des Gefäßes (9) angeordnet ist.

6. Anordnung nach irgendeinem der Ansprüche 4 oder 5, **dadurch gekennzeichnet, daß** die Isolierstoffhülle (6) des Leiterdrahts (22) aus dem gleichen Elastomermaterial besteht wie die Hülse (34).

7. Anordnung nach irgendeinem der Ansprüche 4 bis 6, **dadurch gekennzeichnet, daß** der Leiterdraht (22) ein flexibles Band (27) aus Leiterlitzen umfaßt.

8. Schutzeinrichtung eines elektrischen Mittelspannungsgeräts (4), insbesondere eines Transformators (5), der in ein mit einem flüssigen oder gasförmigen Dielektrikum gefülltes und mit einer Öffnung versehenes Gefäß (9) eingesetzt ist, welche Einrichtung
• eine zumindest teilweise im Inneren des Gefäßes (9) angeordnete und zwischen die Einspeisung und das elektrische Gerät (4) geschaltete Sicherung (10) mit zwei Anschlußkontakten, von denen einer (11) einspeiseseitig und der andere (12) lastseitig angeordnet ist und die über einen, in einem Isolierstoffkörper (14) angeordneten Schmelzleiter (13) miteinander verbunden sind, wobei der lastseitige Anschlußkontakt (12) im Inneren des Gefäßes (9) angeordnet ist, und
• eine elektrische Verbindungsanordnung (20) nach irgendeinem der Ansprüche 1 bis 7 umfaßt, deren lastseitige Anschlußvorrichtung (24) an den einspeiseseitigen Anschlußkontakt (11) der Sicherung angeschlossen ist.

9. Elektrisches Gerät (4), das eine aus einem elektrischen Hochspannungsnetz gespeiste Last darstellt, im Inneren eines, mit einem flüssigen oder gasförmigen Dielektrikum (16) gefüllten und eine Öffnung aufweisenden Gefäßes (9) angeordnet ist und eine Schutzeinrichtung nach Anspruch 8 umfaßt, die zwischen das Einspeisnetz und das elektrische Gerät geschaltet ist.
